# EUROPEAN PATENT SPECIFICATION

(11) **EP 0 498 620 B1**
(45) Date of publication and mention of the grant of the patent: **21.05.1997**
(21) Application number: 92300936.9
(22) Date of filing: 04.02.1992
(51) Int. Cl.: C08L 59/00, C08K 13/06

(54) **Colored polyacetal resin composition**
Gefärbte Polyacetalharzzusammensetzung
Composition de résine polyacétal colorée

(30) Priority: 04.02.1991 JP 13480/91
(43) Date of publication of application: 12.08.1992
(73) Proprietor: POLYPLASTICS CO. LTD., Chuo-Ku Osaka-shi Osaka 541 (JP)
(72) Inventor: Mitsuuchi, Masamichi, Fuji-shi, Shizuoka (JP); Minamisawa, Tsuyoshi, Mishima-shi, Shizuoka (JP); Kitamura, Hiroshi, Fuji-shi, Shizuoka (JP); Kakizaki, Hideo, Fuji-shi, Shizuoka (JP)
(74) Representative: Jackson, Peter

(56) References cited:
- EP-A- 0 292 746
- DE-A- 2 808 675
- GB-A- 1 060 497
- WORLD PATENTS INDEX Week 2579, Derwent Publications Ltd., London, GB; AN 76- 87888X

## Description

The present invention relates to a colored polyacetal resin composition. The composition displays several useful improvements: improved heat stability during kneading and molding; particularly reduced emission of formaldehyde odors; and reduced occurrence of mold deposits and of lowered moldability. Heat stability improvements are also displayed even when it is repeatedly used.

Polyacetal resins have been widely used for components of automobiles, electronic and electrical equipment and other precision instruments, and as building materials and piping, etc., by virtue of their excellent mechanical properties, fatigue resistance, frictional and abrasion resistance, chemical resistance, heat resistance and moldability. With an expansion of the applications, however, further special properties have come to be required of the resin material, which has led to the production of improved resin compositions by incorporating various additives therein.

One such resin composition is a polyacetal resin incorporating carbon black for the purpose of improving weather resistance and imparting electrical conductivity. This resin, however, has the drawback that the presence of the carbon black brings about a considerable reduction in the heat stability. As a result, when kneading a colored master batch, etc. of resin containing a relatively large amount of carbon black, an irritative odor of formaldehyde is emitted which pollutes the working environment. The above resin composition is also disadvantageous in that when molding is conducted for a long period of time, a fine powdery material and a tarry material (mold deposit) adhere to the inner wall of the mold, thus reducing the quality of the molded article.

In the injection molding of a thermoplastic resin, such as polyacetal, there is also an increasing opportunity for grinding for reuse a runner and a sprue employed in the molding. The reuse, which is for the purpose of saving resources and reducing the cost of materials, further reduces the heat stability and other properties. Therefore, an improvement in this respect has also been desired.

The addition of a heat stabilizer, such as a phenolic, amine or urea heat stabilizer, is a known means for preventing the deterioration of the heat stability of the polyacetal resin during molding. This addition can bring about some improvement but not to the desired extent for a composition containing carbon black, so that a further improvement has been sought.

The present inventors have made intensive studies with a view to developing a colored polyacetal resin composition which can solve the above-described problems and, as a result, have found that the above-described object can be attained when a carbon black integrated with an ethylenic polymer is used in combination with a particular stabilizer in the production of a colored polyacetal resin.

GB-A-1060497 is concerned with the known incorporation of carbon black into a polyoxymethylene (polyacetal) composition to reduce the effects of weathering, particularly of ultra-violet radiation. It seeks to avoid the degradation of the polymer which tends to occur if the carbon black is present in comparatively high concentrations and to this end it discloses and claims the intimate admixture of carbon black and a thermoplastic polymer such as polyethylene and thereafter blending the obtained mixture with the polyacetal. It also mentions for oxymethylene/cyclic ether copolymers the use of stabilisers such as an anti-oxidant, e.g. 2,2'-methylene bis(4-methyl-6-tertiary-butyl phenol)and a chain scission inhibitor e.g. cyanoguanidine.

The present invention provides a colored polyacetal resin composition comprising:
(A) 100 parts by weight of a polyacetal resin and, incorporated therein,
(B) 0.1 to 30 parts by weight, in terms of carbon black, of a substantially uniform dispersion of a carbon black integrated into an ethylenic polymer, the amount of the said polymer being 0.3 to 8 times that of the carbon black, wherein the integration is effected by dispersing the carbon black in the ethylenic polymer by dry colouring or master-batching, and
(C) 0.01 to 5 parts by weight of a combination of a nitrogen containing compound with a fatty acid ester compound, and
(D) 0.01 to 5 parts by weight of a hindered phenolic compound.

The carbon black to be used as the component (B) in the present invention is not particularly limited. Any type of carbon black produced by furnace, channel and acetylene processes may be used. It is not used as such but rather as a carbon black integrated, i.e. finely dispersed, in an ethylenic polymer. The incorporation of the integrated carbon black (B) in combination with a compound (C) and a hindered phenolic compound (D) in a polyacetal resin (A) is effective in minimizing the emission of formaldehyde odor and the occurrence of mold deposits attributable to the decomposition of the polyacetal resin (A) by the carbon black during melt processing, such as extruding or molding.

The ethylenic polymer to be used for this purpose is preferably one compatible with the polyacetal resin, less liable to be significantly harmed or decomposed during extruding or molding and less liable to bring about peeling even in a thin-walled or complex-shaped molded article.

Examples of the ethylenic polymer of this type include low-density polyethylene, high-density polyethylene, ethylenevinyl acetate copolymers, ethylene-acrylic ester copolymers, ethylene-α-olefin copolymers, modified ethylene copolymers such as graft or block copolymers mainly composed of the above-described (co)polymers, and polyethylene wax. Although they may be used alone or in the form of a mixture of two or more of them, polyethylene, such as low-density polyethylene and/or high-density polyethylene, is preferably used from the viewpoint of the heat stability, cost, etc.

The integration of carbon black and ethylenic polymer is conducted by dry coloring or master-batching.

For example, predetermined amounts of carbon black and the ethylenic polymer are sufficiently mixed and kneaded with each other while agitating by means of a kneader, a Banbury mixer, a mixing roll, an extruder or the like until the integration is attained, thereby giving a kneaded product comprising the polymer and the carbon black sufficiently finely dispersed therein. The kneaded product may be in the form of any of powder, pellet, etc.

In the above-described integration, additives, such as dyes and pigments other than carbon black, antioxidants and lubricants, may also be used in suitable amounts.

The amount of the ethylenic polymer used in the above-described production process is 0.3 to 8 times by weight, preferably 0.5 to 5 times by weight and most preferably 0.7 to 2 times by weight, that of the carbon black. If this amount is less than 0.3 times by weight, it is difficult to conduct kneading. On the other hand, if it exceeds 8 times by weight, there occur unfavorable phenomena such as the deterioration of the properties inherent in the polyacetal resin and the occurrence of peeling due to poor dispersion of the ethylenic polymer. Although the amount of use of the integrated carbon black (B) varies depending upon the applications and purposes of the composition, it is 0.1 to 30 parts by weight in terms of carbon black based on 100 parts by weight of the polyacetal resin. The amount is preferably 0.5 to 20 parts by weight. In particular, when the carbon black is used in a high concentration for the production of a colored master batch or the like, its amount is preferably 3 to 15 parts by weight. If the amount is less than 0.1 part by weight, no sufficient improvement in the weather resistance, etc., can be attained. On the contrary, if it exceeds 30 parts by weight, a lowering in the properties of the polyacetal resin occurs unfavorably. The polyacetal resin as the component (A) to be used in the present invention is a polymer mainly composed of oxymethylene groups (-CH₂O-) as the constituent unit, and may be any of a polyoxymethylene homopolymer and a copolymer, a terpolymer and a block copolymer comprising a minor amount of constituent units other than the oxymethylene group. Further, the molecule may have not only a linear structure but also a branched or crosslinked structure. There is also no particular limitation on the degree of polymerization.

In the present invention, at least one compound selected from among a nitrogen-containing compound, a fatty acid ester compound and a metal-containing compound comprising a hydroxide, an inorganic acid salt or a carboxylic acid salt of an alkali metal or an alkaline earth metal may be used as the component (C).

Examples of the nitrogen-containing compound include homopolyamides and copolyamides, such as nylon 12, nylon 6.10 and nylon 6.66.610, substituted polyamides having a methylol group or the like, polyamides such as polyester amides synthesized from a nylon salt and caprolactam or from a combination of caprolactone with caprolactam, thermal condensation products synthesized by heating from polyaminotriazole, dicarboxylic acid dihydrazide and urea, nitrogen-containing condensation polymers synthesized from urea and a diamine, a thermal condensation product of urea prepared by heating urea and a uracil, cyanoguanidine, dicyandiamide, guanamine(2,4-diamino-sym-triazine), melamine (2,4,6-triamino-sym-triazine), N-butylmelamine, N-phenylmelamine, N,N-diphenylmelamine, N,N-diallylmelamine, N,N',N"-triphenylmelamine, N,N',N"-trimethylolmelamine, benzoguanamine (2,4-diamino-6-phenyl-sym-triazine),
2,4-diamino-6-methyl-sym-triazine,
2,4-diamino-6-butyl-sym-triazine,
2,4-diamino-6-benzyloxy-sym-triazine,
2,4-diamino-6-butoxy-sym-triazine,
2,4-diamino-6-cyclohexyl-sym-triazine,
2,4-diamino-6-chloro-sym-triazine,
2,4-diamino-6-mercapto-sym-triazine,
2,4-dioxy-6-amino-sym-triazine (amellide),
2-oxy-4,6-diaminosym-triazine (ammeline) and
N,N,N',N'-tetracyanoethylbenzoguanamine.

Examples of the dicarboxylic acid dihydrazide include oxalic hydrazide, adipic hydrazide, sebacic hydrazide and dicarboxylic acid dihydrazides represented by the following general formulae [I] to [III]: 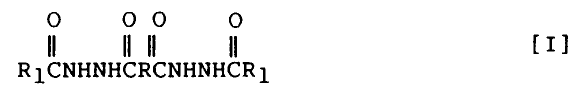 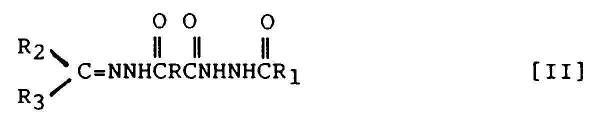 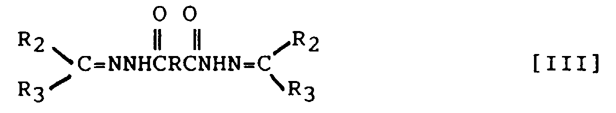 wherein R stands for a group having 10 or more carbon atoms selected from among a branched alkylene group, a straight-chain alkylene group substituted with a phenyl group or -CO-R₄ wherein R₄ stands for a methoxy group or -NHNH-CO-R₁, a straight-chain or branched alkenylene group and a straight-chain or branched alkadienylene group, and R1, R2 and R3 each independently stand for a hydrogen atom, a lower alkyl group, a dodecylthioethyl group, a (3,5-di-tert-butyl-4-hydroxyphenyl)ethyl group, a phenyl group, a tert-butyiphenyl group, a 2-hydroxyphenyl group, a 3,5-di-tert-butyl-4-hydroxyphenyl group or a 2-pyrrolidon-5-yl group.

In the above-described general formulae [I] to [III], examples of the branched alkylene group represented by R include 1,6-decanediyl, 6-ethyl-1,12-dodecanediyl, 6-ethyl-1,16-hexadecanediyl and 7,11-dimethyl-octadecane-1,8-diyl, examples of the straight-chain alkylene group substituted with a phenyl group include 7,8-diphenyl-1,14-tetradecanediyl, 6,8-diphenyl-1,14-tetradecanediyl and 7-phenyl-1,13-tridecanediyl, and examples of the straight-chain alkylene group substituted with -CO-R₄ include 6,8-bis(-CO-R₄)-1,14-tetradecanediyl and 6,7,8,9-tetra(-CO-R₄)-1,4-tetradecanediyl.

Examples of the lower alkyl group represented by the R and R₃ include methyl, ethyl, propyl, isopropyl, butyl, isobutyl and tert-butyl.

The nitrogen-containing compound is preferably at least one member selected from among melamine and its derivatives and dicarboxylic acid dihydrazides, more preferably melamine and/or dicarboxylic acid dihydrazide.

The fatty acid ester compound to be used in the present invention is one derived from at least one saturated or unsaturated fatty acid having 12 to 32 carbon atoms and a polyhydric alcohol such as glycerol, diglycerol, pentaerythritol, sorbitan or ethylene glycol.

Examples of the fatty acid to be used in the preparation of the fatty acid ester compound include lauric acid, tridecylic acid, myristic acid, pentadecylic acid, palmitic acid, stearic acid, nonadecylic acid, behenic acid, naturally occurring fatty acids containing the above-described fatty acids, and mixtures thereof. Among the above-described fatty acid ester compounds, a fatty acid ester derived from a fatty acid selected from among palmitic acid, stearic acid and behenic acid and a polyhydric alcohol selected from glycerol and sorbitan is preferred. Preferred examples of the fatty acid ester compound include glycerin monostearate, glycerin distearate, glycerin monobehenate, sorbitan monostearate and sorbitan monobehenate.

The above-described compounds as the component (C) may be used alone or in a combination of two or more of them.

Particularly preferred examples of the combination of the compounds include a combination of at least one member selected from melamine and dicarboxylic acid hydrazide with a member selected from glycerin monostearate, glycerin distearate, glycerin monobehenate, sorbitan monostearate and sorbitan monobehenate and/or a calcium salt of stearic acid or behenic acid.

The amount of incorporation of the compound (C) in the composition of the present invention is in the range of from 0.01 to 5 parts by weight, preferably from 0.03 to 2 parts by weight and particularly preferably 0.05 to 1.0 part by weight, based on 100 parts by weight of the polyacetal resin as the component (A). If this amount is less than 0.01 parts by weight, no sufficient effect of improving the heat stability can be attained. On the other hand, if it exceeds 5 parts by weight, the compound as such is liable to be deposited on the surface of the composition or molded article. It is believed that the incorporation of the component (C) in combination with the hindered phenolic compound (D) in the polyacetal resin containing the integrated carbon black (B) inhibits the decomposition of the polyacetal resin and enables formaldehyde generated by the decomposition to be captured, so that the generation of decomposition gas during molding is minimized and mold deposition hardly occurs.

Examples of the hindered phenolic compound (D) to be used in the present invention include
2,2'-methylenebis(4-methyl-6-tert-butylphenol), 1,6hexanediol bis[3-(3,5-di-tert-butyl-4-hydroxyphenyl)-propionate], pentaerythrityl tetrakis[3-(3,5-di-tert-butyl-4-hydroxyphenyl) propionatel, triethylene glycol bis-[3-(3-tert-butyl-5-methyl-4-hydroxyphenyl)propionate], 1,3,5-trimethyl-2,4,6-tris(3,5-di-tertbutyl-4-hydroxybenzyl)benzene, n-octadecyl 3-(4'-hydroxy-3',5'-di-tert-butylphenyl)propionate, 4,4'methylenebis(2,6-di-tert-butylphenol), 4,4'butylidenebis(6-tert-butyl-3-methylphenol), 2,2'-thiodiethyl bis[3-(3,5-di-tert-butyl-4-hydroxyphenyl)propionate],
distearyl 3,5-di-tert-butyl-4-hydroxybenzyl phosphate, 2-tert-butyl-6-(3-tert-butyl-5-methyl-2-hydroxybenzyl)-4-methylphenyl acrylate and N,N'-hexamethylenebis(3,5-di-tert-butyl-4-hydroxyhydrocinnamide).
They may be used alone or in the form of a mixture of two or more of them. Among them, 1,6-hexanediol bis(3-(3,5-di-tert-butyl-4-hydroxyphenyl)propionatel, pentaerythrityl tetrakis[3-(3,5-di-tert-butyl-4-hydroxyphenyl)propionate], triethylene glycol bis-[3-(3-tert-butyl-5-methyl-4-hydroxyphenyl)propionate] and N,N'-hexamethylenebis(3,5-di-tert-butyl-4-hydroxyhydrocinnamide) are particularly preferred.

The amount of the hindered phenolic compound (D) to be added in the present invention is 0.01 to 5 parts by weight, preferably 0.1 to 3 parts by weight based on 100 parts by weight of the polyacetal resin as the component (A). If this amount is excessively small, no sufficient effect can be attained. On the other hand, if it is excessively large, no further heat stabilising effect is achieved and unfavorable phenomena such as bleeding occur.

In order to impart desired properties to the composition of the present invention according to the purpose, it is also possible to incorporate further known additives, for example, lubricants, nucleating agents, releasing agents, antistatic agents or other surfactants, or organic polymer materials, inorganic or organic fibrous, particulate or flaky fillers, etc. They may be used alone or in a combination of two or more of them.

There is no particular limitation on the method of preparing the composition of the present invention, and the composition can be easily prepared through the use of known facilities and methods commonly used in the art for the production of the conventional resin composition.

The resin composition of the present invention can be molded by any of extrusion molding, injection molding, compression molding, vacuum molding, blow molding and foam molding.

As is apparent from the foregoing description and Examples, the composition of the present invention containing a particular carbon black has a significantly improved heat stability, is less liable to bring about mold deposit even in continuous molding for a long period of time and brings about no significant increase in the amount of evolution of formaldehyde in repetitive molding (regeneration test) as compared with a colored resin composition containing the conventional carbon black This contributes to a significant improvement in productivity.

### [Examples]

The present invention will now be described in more-detail with reference to the following Examples. Respective characteristic values of the compositions in the Examples and Comparative Examples were determined by the following methods.

### 1) Weight loss on heating

5 g of a sample was heated at 235°C for 45 min to determine the weight loss on heating (ppm/min).

### 2) Amount of extracted formalin

50 g of a sample was immersed in water and boiled at 100°C for one hour. Formalin extracted with the hot water was quantitatively determined.

### 3) Molding test

The pellet prepared in the Examples was diluted with a polyacetal resin (trade name: Duracon M90-02, manufactured by Polyplastics Co., Ltd.) in a carbon concentration of 0.5% by weight (based on the whole composition), and subjected to the following test.

### (1) Continuous molding test

injection molding machine: Nissei PS20E (manufactured by Nissei Plastic Industrial Co., Ltd.)

| | |
|---|---|
| cylinder temperature: | 200°C |
| | |
| injection pressure: | 74 MPa (750 kg/cm²) |
| | |
| injection time: | 4 sec |
| | |
| cooling time: | 3 sec |
| | |
| mold temperature: | 30°C |

Under the above-described molding conditions, a molded article having a particular shape was continuously molded (for 24 hr), and the state of occurrence of mold deposition was observed with the naked eye and evaluated according to the following 5 ranks:
- 0:: no deposit was observed,
- 1:: deposit was hardly observed,
- 2:: a small amount of deposit was observed,
- 3:: a relatively large amount of deposit was observed,
- 4:: a large amount of deposit adhered.

### (2) Repetitive molding test (amount of evolved gas)

Repetitive molding (re-molding of a material ground after molding) was conducted by means of an injection molding machine through the use of the above-described mixture (carbon concentration: 0.5% by weight), and the amount of evolved gas was determined on the molded articles.

* Amount of evolved gas: a molded article was ground, and 8 g of the resultant powder was allowed to stay in a molten state at 20°C for 5 min in a melt indexer. A load was applied to the melt so that the melt flowed out. The evolved formaldehyde was collected, and the amount thereof was measured by the acetylacetone method and expressed in terms of the weight (ppm) of evolved formaldehyde per unit weight of the resin.
The symbols in the Table have the following meanings:

### B. Carbon black:

B1: acetylene black (integrated with polyethylene in an amount of 1.5 times by weight that of the acetylene black),
B2: acetylene black (integrated with polyethylene in the same amount by weight as the acetylene black),
B3: furnace black (integrated with polyethylene in the same amount by weight as the furnace black).

### C. Nitrogen-containing compound:

C1: Melamine,
C2 : 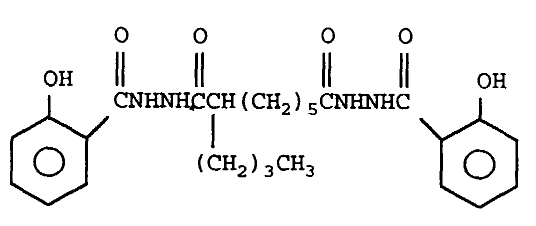 Fatty acid ester compound
C3: glycerin monostearate,
C4: sorbitan monostearate.

### D. Hindered phenolic compound:

D1: pentaerythrityl tetrakis[3-(3,5-di-tert-butyl-4-hydroxyphenyl)propionate],
D2: triethylene glycol bis[3-(3-tert-butyl-5-methyl-4-hydroxyphenyl)propionate].

Others:
- B'1:: acetylene black,
- B'2:: furnace black,
- PE:: polyethylene.

### Examples 1 to 6 and Comparative Example 1 to 6

To a polyacetal resin (A) (trade name: Duracon; manufactured by Polyplastics Co., Ltd.) were added a carbon black (B) integrated with an ethylenic polymer, various compounds (C) such as a nitrogen-containing compound, and a hindered phenolic compound (D) in proportions specified in Table 1. They were mixed with each other and melt-kneaded by means of a double-screw extruder to prepare compositions in pellet form. Then, these pellets were subjected to the above described evaluations.

For comparison, as shown in Table 2, compositions containing (1) an untreated (i.e. non-integrated) carbon black (the above-described B'1 and B'2) or (2) a composition containing a mere mixture of an untreated carbon black with polyethylene were pelletized and evaluated in the same manner as that of the Examples.

The results are summarized in Tables 1 and 2.

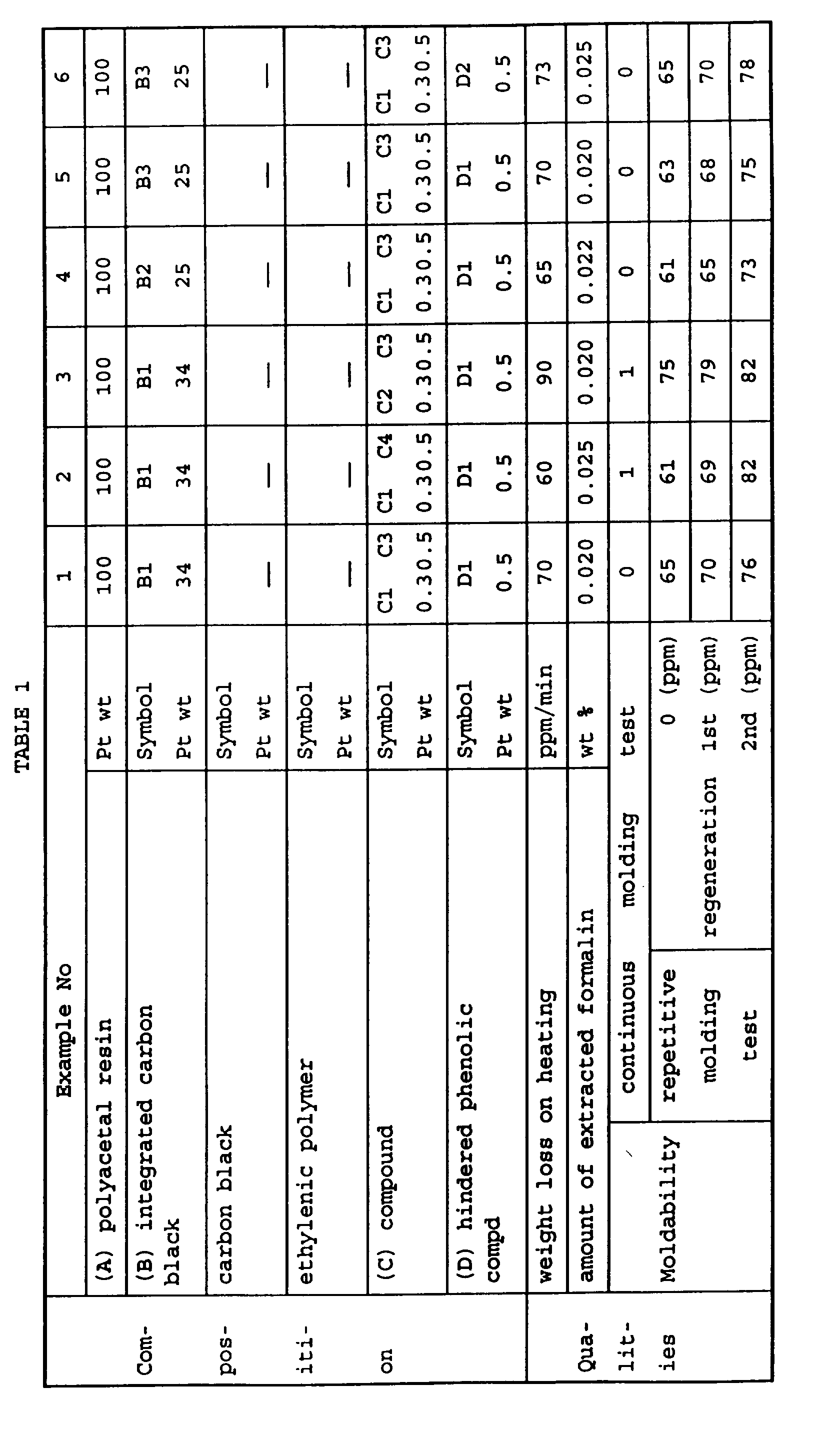

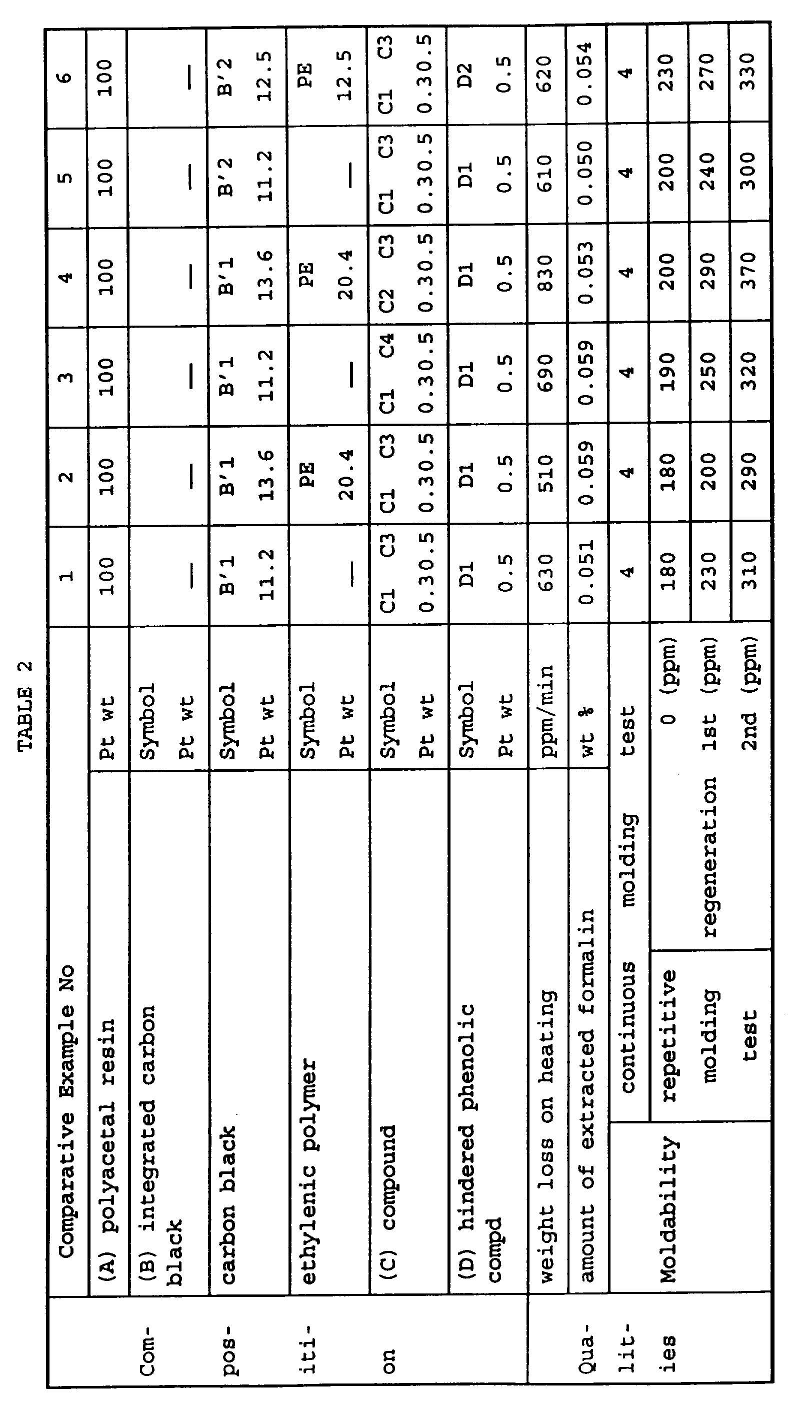

## Claims

1. A colored polyacetal resin composition comprising:
(A) 100 parts by weight of a polyacetal resin and, incorporated therein,
(B) 0.1 to 30 parts by weight, in terms of carbon black, of a carbon black integrated into an ethylenic polymer, the amount of the said polymer being 0.3 to 8 times that of the carbon black, wherein the integration is effected by dispersing carbon black in the ethylenic polymer by dry colouring or master-batching, and
(C) 0.01 to 5 parts by weight of a combination of a nitrogen containing compound with a fatty acid ester compound, and
(D) 0.01 to 5 parts by weight of a hindered phenolic compound.

2. A composition according to claim 1, wherein the ethylenic polymer in component (B) is polyethylene.

3. A composition according to claim 1 or 2, wherein the amount of incorporation of the component (B) is 3 to 15 parts by weight in terms of the carbon black.

4. A composition according to any preceding claim, wherein the component (C) includes a nitrogen-containing compound selected from melamine, dicarboxylic acid dihydrazide and a combination thereof.

5. A composition according to any preceding claim, wherein the component (C) includes an ester of a fatty acid selected from palmitic acid, stearic acid, and behenic acid with a polyhydric alcohol selected from glycerol and sorbitan.

6. A composition according to claim 5, wherein the fatty acid ester is at least one member selected from glycerin monostearate, glycerin distearate and sorbitan monostearate.

7. A composition according to any preceding claim, wherein the component (C) is a combination of at least one member selected from melamine and dicarboxylic acid dihydrazide with a member selected from glycerin monostearate, glycerin distearate, glycerin monobehenate, sorbitan monostearate and sorbitan monobehenate.

## Patentansprüche

1. Gefärbte Polyacetalharz-Zusammensetzung, umfassend:
(A) 100 Gew.-Teile eines Polyacetalharzes und, darin eingearbeitet,
(B) 0,1 bis 30 Gew.-Teile, bezogen auf Ruß, eines in ein ethylenisches Polymer integrierten Rußes, wobei der Anteil des Polymers 0,3- bis 8mal so hoch wie der des Rußes ist, wobei die Integration bewerkstelligt wird, indem der Ruß durch Trockenfärben oder dem Vermischen mit Masterbatches im ethylenischen Polymer dispergiert wird,
(C) 0,01 bis 5 Gew.-Teile einer Kombination aus einer stickstoffhaltigen Verbindung mit einer Fettsäureester-Verbindung, und
(D) 0,01 bis 5 Gew.-Teile einer gehinderten phenolischen Verbindung.

2. Zusammensetzung nach Anspruch 1, wobei es sich bei dem ethylenischen Polymer in Komponente (B) um Polyethylen handelt.

3. Zusammensetzung nach Anspruch 1 oder 2, wobei es sich bei dem Einarbeitungsanteil der Komponente (B) um 3 bis 15 Gew.-Teile, bezogen auf Ruß, handelt.

4. Zusammensetzung nach einem der vorhergehenden Ansprüche, wobei die Komponente (C) eine stickstoffhaltige Verbindung umfaßt, die aus Melamin, Dicarbonsäuredihydrazid und deren Kombination ausgewählt ist.

5. Zusammensetzung nach einem der vorhergehenden Ansprüche, wobei die Komponente (C) einen Ester aus einer Fettsäure, ausgewählt aus Palmitinsäure, Stearinsäure und Behensäure, und einem Polyol, ausgewählt aus Glycerin und Sorbitan, umfaßt.

6. Zusammensetzung nach Anspruch 5, wobei es sich bei dem Fettsäureester um wenigstens einen Bestandteil handelt, der aus Glycerinmonostearat, Glycerindistearat und Sorbitanmonostearat ausgewählt ist.

7. Zusammensetzung nach einem der vorhergehenden Ansprüche, wobei es sich bei der Komponente (C) um eine Kombination aus wenigstens einem aus Melamin und Dicarbonsäuredihydrazid ausgewählten Bestandteil mit einem aus Glycerinmonostearat, Glycerindistearat, Glycerinmonobehenat, Sorbitanmonostearat und Sorbitanmonobehenat ausgewählten Bestandteil handelt.

## Revendications

1. Une composition de résine polyacétal colorée comprenant :
(A) 100 parties en poids d'une résine polyacétal et, en incorporation dans cette résine,
(B) 0,1 à 30 parties en poids, en noir de carbone, d'un noir de carbone intégré dans un polymère éthylénique, la quantité dudit polymère étant de 0,3 à 8 fois celle du noir de carbone, l'intégration étant réalisée en dispersant le noir de carbone dans le polymère éthylénique par coloration à sec ou par utilisation d'un mélange coloré maître, et
(C) 0,01 à 5 parties en poids d'une combinaison d'un composé azoté avec un composé ester d'acide gras, et
(D) 0,01 à 5 parties en poids d'un composé phénolique encombré.

2. Une composition selon la revendication 1, dans laquelle le polymère éthylénique du composant (B) est un polyéthylène.

3. Une composition selon la revendication 1 ou 2, dans laquelle la quantité d'incorporation du composant (B) est, en noir de carbone, de 3 à 15 parties en poids.

4. Une composition selon l'une quelconque des revendications précédentes, dans laquelle le composant (C) comprend un composé azoté choisi parmi la mélamine, les dihydrazides d'acides dicarboxyliques et leurs combinaisons.

5. Une composition selon l'une quelconque des revendications précédentes, dans laquelle le composant (C) comprend un ester d'un acide gras choisi parmi l'acide palmitique, l'acide stéarique et l'acide béhénique avec un polyol choisi parmi le glycérol et le sorbitan.

6. Une composition selon la revendication 5, dans laquelle l'ester d'acide gras est l'un au moins des membres de l'ensemble formé par le monostéarate de glycérine, le distéarate de glycérine et le monostéarate de sorbitan.

7. Une composition selon l'une quelconque des revendications précédentes, dans laquelle le composant (C) est une combinaison de l'un au moins des membres de l'ensemble formé par la mélamine et les dihydrazides d'acides dicarboxyliques avec un membre de l'ensemble formé par le monostéarate de glycérine, le distéarate de glycérine, le monobéhénate de glycérine, le monostéarate de sorbitan et le monobéhénate de sorbitan.
